# EUROPEAN PATENT SPECIFICATION

(11) **EP 1 383 629 B1**
(45) Date of publication and mention of the grant of the patent: **20.07.2005**
(21) Application number: 01932065.4
(22) Date of filing: 30.04.2001
(51) Int. Cl.: B23Q 16/10, B23Q 1/26

(54) **POSITIONING MULTIFUNCTIONAL MECHANISM FOR SUPPORTING TOOL-HOLDING DEVICES**
MULTIFUNKTIONALER POSITIONSMECHANISMUS ALS TRÄGER FÜR WERKZEUGHALTER
MECANISME A FONCTIONS MULTIPLES POUR POSITIONNEMENT DU SUPPORT DE DISPOSITIFS PORTE-OUTIL

(43) Date of publication of application: 28.01.2004
(73) Proprietor: DUPLOMATIC AUTOMAZIONE S.P.A., 21052 Busto Arsizio (Varese) (IT)
(72) Inventor: DE BERNARDI, Franco, I-21052 Busto Arsizio (IT)
(74) Representative: Perani, Aurelio
(86) International application number: PCT/IT2001/000207
(87) International publication number: WO 2002/090045

(56) References cited:
- EP-A- 0 899 057
- DE-A- 3 143 999
- DE-A- 3 702 418
- DE-A- 3 738 551
- GB-A- 2 111 873
- US-A- 3 941 014
- US-A- 5 007 314
- US-A- 5 440 952
- US-A- 5 682 658

## Description

The present invention refers to a positioning multifunctional mechanism for devices to hold cutting and/or rotating tools for drilling and/or milling operations, for machine tools, including a table designed to take on operating positions spaced apart angularly, said table being designed for supporting tool-holding devices, a rotating support column for said table, a stationary column fixed to the base of a machine tool, motor means to rotate said rotating table support column around a predetermined rotation axis, connection means movable between a first position in which the respective connection means integral with said rotating column and connection means integral with said stationary column are connected to each other, in predetermined operating positions spaced apart angularly, and a position in which said connection means are axially disengaged from said connection means.

Mechanisms of the type described above are known in the art and are commonly used for supporting tool-holder turrets or spindles to carry out turning and/or milling operations on complex-shaped elements, said mechanisms being mounted on the machine tool in a position such that the rotating axis of the support table corresponds to the axis which, in lathes, is conventionally indicated as axis "B", i.e. an axis perpendicular to the plane defined by the axes "x" and "z".

An example of said mechanism is illustrated in document EP-A-0 899 057.

According to the known art described above, the table supporting the turret or, in alternative, a spindle for milling or drilling tools, can take on operating positions, spaced apart angularly, which are those made possible by the connection means between the rotating column and the stationary base as well as by the movable means to determine the respective connection.

Since these means are composed of toothed gears, for example of the Hirth type, the angular positions will be those determined by the value of the pitch of the teeth of said toothed gear.

Consequently, continuous positioning, at any angular value whatsoever, is not possible with the mechanisms known in the art.

DE 3702418 A1 discloses an indexing mechanism having cup springs which act on to a rotating column, with the interposition of a bearing. The cup springs act always in the same direction for pressing the rotating table against the stationary body with the interposition of the bearings. The preload of the springs act always on to the rotating table either when the connection means are activated and when they are not. Therefore, the cup springs are not able to react to variable outer forces because the springs act always in the same direction for pressing the rotating table against the stationary body with the interposition of the bearings.

Moreover, with the same known mechanisms it is not possible to carry out correct milling operations, by so-called interpolation, while the support table for the tool-holder turret or spindle is rotating because of the axial play existing in the bearings by means of which the rotating column is mounted on to the stationary base and also because of those created to permit axial and radial movement of the table at the end of positioning operations.

The problem at the basis of this invention is to devise a positioning multifunctional mechanism of the type described above, with which it is possible to stop even in angular operating positions different from those made possible by the locking teeth and which, moreover, makes it possible to use the tools also while the table is in continual rotation, carrying out so-called interpolation operations.

This problem is solved by the mechanism according to the invention, in accordance with claim 1.

The invention will now be described in greater detail making reference to a practical embodiment example, given only as an indicative and non-limiting example, illustrated in the enclosed diagrams, where:

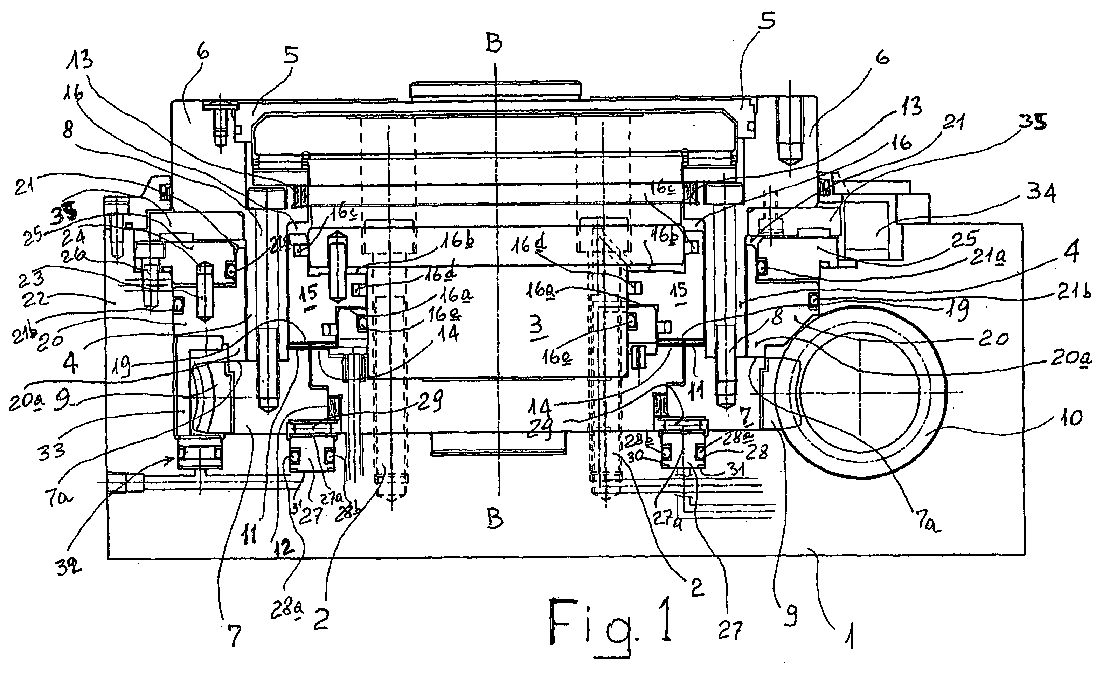

- figure 1, shows a cross section of the mechanism according to the invention, in the position where the rotating column is locked by the toothed gear connection means;

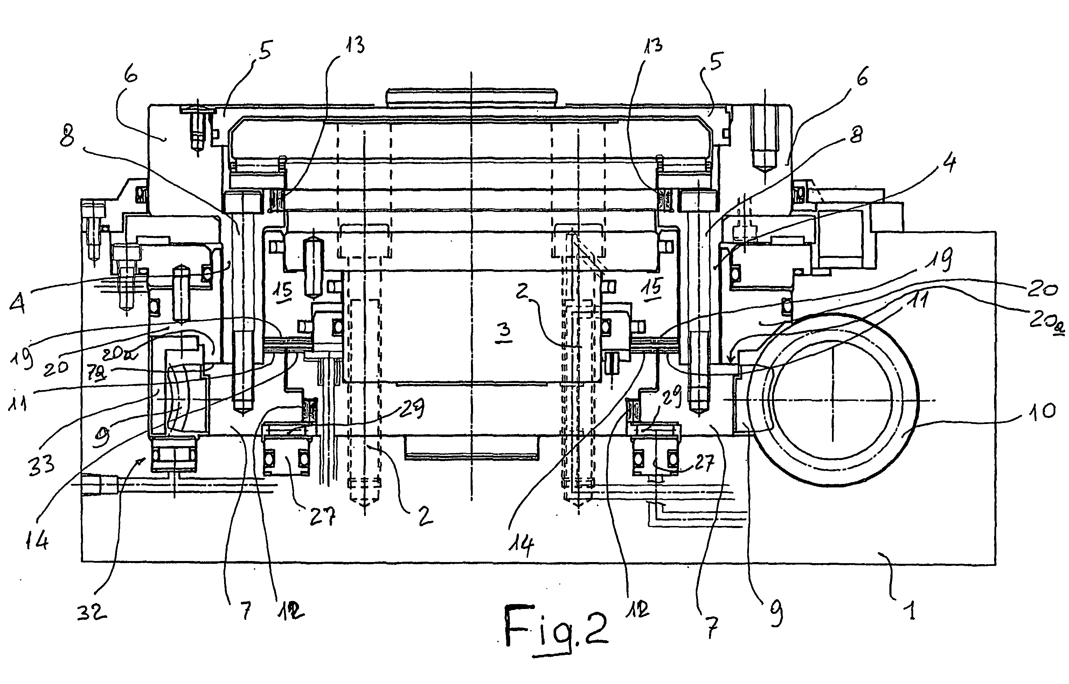

- figure 2 shows the mechanism of fig 1 in the position where the toothed gear connection means are free and the rotating column is locked in an intermediate angular position by means of the brake;

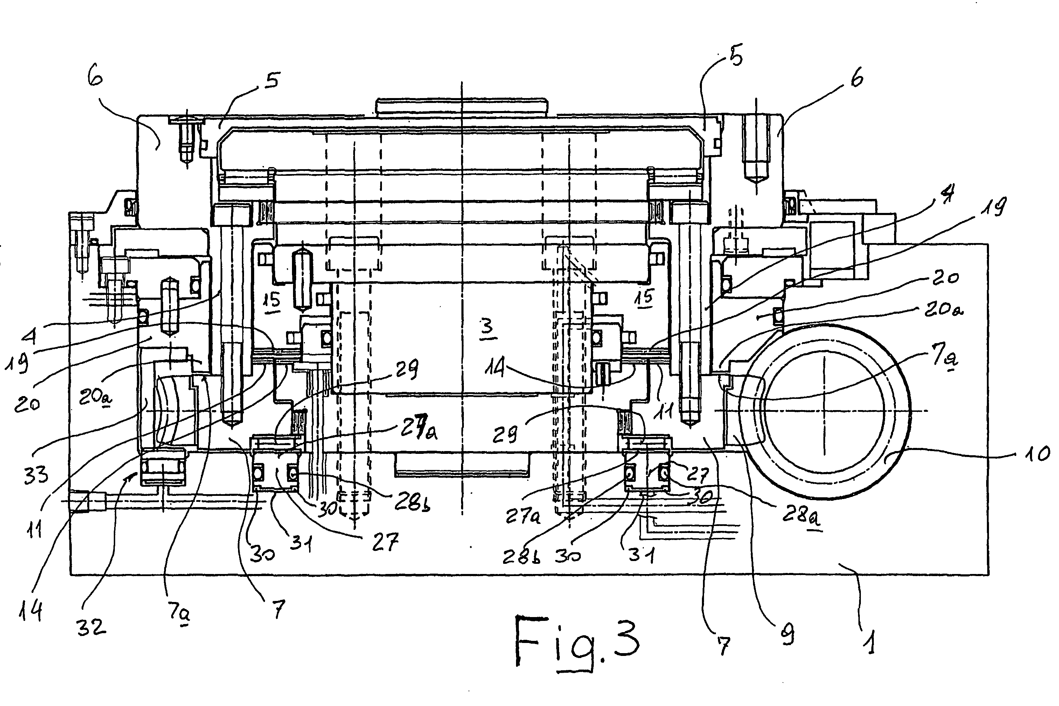

- figure 3 shows the mechanism of fig 1 where the rotating column is free to rotate around its own axis and the play take-up means of the axial bearings are operative.

With reference to the above figures, 1 indicates the stationary base of the mechanism. Said base can form part of a conventional slide connected to a machine tool, in particular a lathe.

A stationary supporting column 3 having, in this case, a circular cross section is connected to the base 1 by means of bolts 2.

In a position concentric to the supporting column 3, a rotating column 4 is mounted and to which, by means of the interposition of a centering element 5, a table 6 is connected which, in the example, is ring-shaped.

The latter is intended for supporting, in a conventional way, operating assemblies, not shown, such as a tool-holder turret or spindle for rotating tools, for drilling or milling operations.

On the opposite side of the table 6, the rotating column 4 is connected to a ring-shaped part 7 by means of a series of screws 8.

The annular part 7 is provided with a toothed gear 9 engaged with a screw 10 for the transmission of movement to the rotating column 3, this movement being provided by a conventional electric motor, not illustrated. The screw 10, for example, can be of the variable pitch type to take up the play.

The said annular part 7 is provided with a toothed gear 11, turned axially in direction of the table 6, and it is associated to the stationary column 3 by means of the radial needle bearing 12. Another needle bearing 13 completes mounting of the rotating column 4 concentrically to the supporting stationary column 3.

The latter is provided with a toothed gear 14, with teeth in the direction of the table 6, positioned on the same plane at right angles to the axis B-B around which the column 4 rotates.

An annular element 15 is mounted concentrically to the stationary column 3 with the possibility of moving axially to it and to the body of the rotating column 4.

Said annular element 15 is, therefore, situated in an annular cavity 16, formed radially between the stationary column 3 and the rotating column 4.

Said annular cavity 16 operates as a hydraulic cylinder, with chambers 16a and 16b, whose piston is represented by the element 15.

The axial pin 17, engaged in a hole 18 in the body of the stationary column 3 performs an anti-rotation action for the element 15.

The latter is provided with a toothed gear 19, turned in the direction of the toothed gears 11 and 14, and is provided with sufficient radial extension to cover both said gears 11 and 14.

The teeth of the above-mentioned gears are, in particular but not necessarily, of the conventional type called Hirth.

The chambers 16a and 16b, sealed with special seals 16c, 16d and 16e, are connected by conventional means to a hydraulic fluid feeding system to perform axial movement of the element 15 between a position in which the toothed gear 19 is engaged with both toothed gears 11 and 14 and a position in which said gear is moved away from and, therefore, disengaged from the toothed gears 11 and 14.

In a concentric position with the rotating column 4, the mechanism according to the invention also includes another annular element 20 which slides between a cavity 21 formed by the said rotating column 4 and a collar 22 integral with the base 1.

More precisely, the annular element 20 is provided with a large number of pins 23, distributed around its circumference to prevent its rotation. The pins are integral with the element 20 and are inserted into respective holes 24, the latter being made in an annular element 25 made integral with the collar 22 by means of screws 26 and thus integral with the base 1.

The annular element 20 acts like the piston of a hydraulic cylinder, the latter being represented by the cavity 21 sealed by the seals 21a and 21b and connected to a conventional hydraulic feeding system. The element 20 can be moved axially between a first position where its part 20a, facing the element 7 of the rotating column 4, is detached from it and another position where it is pressed, by means of the hydraulic pressure fed into cavity 21, against the opposite side 7a of the element 7, so locking through friction the rotating column in any angular position whatsoever.

The mechanism according to the invention also includes a ring 27, concentric to the axis B-B of the rotating column 4, situated in an annular cavity 28 with the interposition of the annular seals 28a and 28b.

Said cavity 28 is open on the side facing the annular element 7 integral with the rotating column 4. The ring 27 comes out of the cavity 28 with its end 27a and with this it engages with an axial thrust bearing 29. The chamber 30, delimited by the annular seals 28a, 28b and by the bottom 31 of the cavity 28, is connected to a conventional hydraulic system by means of which, sending fluid under pressure, the ring 27, when required by the operating cycle, is pushed against the bearing 29 so determining take up of the play and permitting exact axial positioning of the rotating column 4 with respect to the stationary parts of the mechanism.

Simultaneously, by means of several hydraulic cylinders, indicated as a whole with 32 and by means of corresponding connection elements 33, the annular element 20 is kept raised, providing release of the braking action on element 7.

The mechanism also includes an angular position transducer indicated with 34 and 35.

From the above description, it can be seen that the mechanism according to the invention makes it possible for the table 6 to take on any angular position whatsoever, even different from those imposed by the pitch of the teeth of the Hirth toothed gears 11, 14 and 19, due to the presence of the annular element 20 which acts as a brake and which thus makes it possible to stop the rotating column 4 in any desired angular position.

Furthermore, by means of the unlocked position of the toothed gears 11, 14 and 19 and the raised position of the annular element 20 disengaged through friction from the part 7 integral with rotating column 4, the table 6 can be kept constantly in rotation permitting simultaneous use of the tools mounted on said table.

In these operating conditions, the ring 27 is kept pressed against the bearing 29 in order to take up the play.

The result is an operating condition of maximum precision.

As can be seen from the description, the mechanism according to the invention makes it possible to solve the above problem.

Evidently, numerous variations and modifications can be made to the above-described positioning multifunctional mechanism, all included within the protection scope defined by the following claims.

## Claims

1. Multi-functional mechanism for the positioning of tool-holding devices for cutting and/or rotating tools for drilling and/or milling operations, for machine tools, including a table (6) designed to take on operating positions spaced apart angularly, said table (6) supporting said tool-holding devices, a rotating support column (4) for said table (6), a stationary column (3) fixed to the base (1) of a machine tool, motor means (9, 10) to rotate said rotating support column (4) of the table (6) around a predetermined rotation axis (B-B), connection means (15, 19) movable between a first position in which they connect to each other respective connection means (11), which are integral with said rotating column (4), and connection means (14) integral with said stationary column (3), in predetermined operating positions spaced apart angularly, and a position in which said connection means (15, 19) are axially disengaged from said connection means (11, 14), **characterized in that** it includes a play take-up member (27) acting on said rotating column (4), with the interposition of an axial thrust bearing (29), in the opposite direction to the locking direction of said connection means (15), said play take-up member (27) only operating when said rotating column (4) is free to rotate around the stationary column (3).

2. Mechanism according to claim 1, **characterized in that** it also includes a frictional locking member (20) acting on a part (7) integral with said rotating column (4), said locking member (20) locking said rotating column in various angular operating positions even different from those determined by said connection means (15, 19) and connection means (11, 14).

3. Mechanism according to claim 2, **characterized in that** said frictional locking member (20) is operated by a corresponding annular hydraulic cylinder (21) positioned concentrically to said rotating column (4).

4. Mechanism according to claim 1, **characterized in that** said play take-up member (27) is composed of a ring positioned concentrically to said rotating column (4) within a corresponding annular cavity (28) formed inside said base (1), said cavity (28) acting as a hydraulic cylinder for said ring (27).

5. Mechanism according to claim 1, **characterized in that** said connection means (19), to connect the connection means (11) integral with said rotating column (4) to the connection means (14) integral with said stationary column (3), are operated by an annular hydraulic cylinder (16a, 16b) positioned concentrically to said rotating column (4).

6. Mechanism according to any of the previous claims, **characterized in that** it includes several hydraulic cylinders (32) and respective connection elements (33) acting on said annular element (20) to push it, when required by the operational cycle of the mechanism, in a raised position disengaged from said part (7) integral with said rotating column (4) and to keep it in said position.

## Patentansprüche

1. Multifunktionsmechanismus für die Positionierung einer Werkzeughaltevorrichtung für Schneide- und/oder sich drehende Werkzeuge zum Bohren und/oder Fräsen für Werkzeugmaschinen mit einem Tisch (6), konstruiert, um voneinander um Winkel getrennte Arbeitspositionen einzunehmen, wobei der Tisch (6) die Werkzeughaltevorrichtungen trägt,
einer sich drehenden Tragsäule (4) für den Tisch (6),
einer stationären, an der Basis (1) einer Werkzeugmaschine befestigten Säule (3), Motormitteln (9, 10) zum Drehen der sich drehenden Tragsäule (4) des Tisches (6) um eine festgelegte Drehachse (B-B),
Verbindungsmitteln (15, 19), die zwischen einer ersten Position, in der sie jeweils in festgelegten, um Winkel getrennten Arbeitspositionen in der sich drehenden Säule (4) integriert ausgebildete Verbindungsmittel (11) mit in der stationären Säule (3) integriert ausgebildeten Verbindungsmittel (14) miteinander verbinden, und einer Position, in der die Verbindungsmittel (15, 19) axial von den Verbindungsmitteln (11, 14) freigegeben sind, bewegbar sind,
**dadurch gekennzeichnet,**
**dass** er ein Spielaufnahmeelement (27) aufweist, das auf die sich drehende Säule (4) mit einem dazwischen gesetzten Axialschublager (29) in entgegen gesetzter Richtung zur Verriegelungsrichtung der Verbindungsmittel 15 wirkt, wobei das Spielaufnahmeelement (27) nur wirkt, wenn die sich drehende Säule (4) frei ist, sich um die stationäre Säule (3) zu drehen.

2. Mechanismus nach Anspruch 1,
**dadurch gekennzeichnet,**
**dass** er auch ein Reibungs-Verriegelungselement (20) umfasst, das auf ein in die sich drehende Säule (4) integriertes Teil (7) wirkt, wobei das Verriegelungselement (20) die sich drehende Säule in Arbeitspositionen verschiedener Winkel verriegelt, die gleich unterschiedlich zu den durch die Verbindungsmittel (15, 19) und Verbindungsmittel (11, 14) festgelegten sind.

3. Mechanismus nach Anspruch 2,
**dadurch gekennzeichnet,**
**dass** das Reibungs-Verriegelungselement (20) durch einen zugeordneten umlaufenden Hydraulikzylinder (21) betätigt wird, der konzentrisch zu der sich drehenden Säule (4) angeordnet ist.

4. Mechanismus nach Anspruch 1,
**dadurch gekennzeichnet,**
**dass** das Spielaufnahmeelement (27) aus einer konzentrisch zu der sich drehenden Säule (4) innerhalb einer in der Basis (1) ausgeformten umlaufenden Ausnehmung (28) gebildet ist, wobei die Ausnehmung (18) als Hydraulikzylinder für den Ring (27) dient.

5. Mechanismus nach Anspruch 1,
**dadurch gekennzeichnet,**
**dass** die Verbindungsmittel (19), um die in der sich drehenden Säule (4) integriert ausgebildeten Verbindungsmittel (21) mit den in die stationäre Säule (3) integriert ausgebildeten Verbindungsmittel (14) zu verbinden, durch einen umlaufenden hydraulischen Zylinder (16a, 16b) betätig werden, der konzentrisch zu der sich drehenden Säule (4) angeordnet ist.

6. Mechanismus nach einem der vorhergehenden Ansprüche,
**dadurch gekennzeichnet,**
**dass** er mehrere hydraulische Zylinder (32) und entsprechende Verbindungselemente (33) umfasst, die auf das umlaufende Element (20) wirken, um es, falls durch den Arbeitszyklus des Mechanismus erforderlich, in eine angehobene Position zu drücken, freigegeben von dem in die sich drehende Säule (4) integrierten Teil (7), und dieses in dieser Position zu halten.

## Revendications

1. Mécanisme à fonctions multiples pour le positionnement de dispositifs porte-outils pour découper et/ou faire pivoter des outils pour des opérations de perçage et/ou de forage, pour des machines-outils, comprenant une table (6) conçue pour prendre des positions de fonctionnement espacées de manière angulaire, ladite table (6) supportant ledit support de dispositifs porte-outils, une colonne de support rotative (4) pour ladite table (6), une colonne stationnaire (3) fixée à la base (1) de la machine-outil, des moyens de moteur (9, 10) pour faire pivoter ladite colonne de support rotative (4) de la table (6) autour d'un axe de rotation (B-B) prédéterminé, des moyens de raccordement (15, 19) pouvant être déplacés entre une première position dans laquelle ils se raccordent l'un à l'autre aux moyens de raccordement respectifs (11), qui font partie intégrante de ladite colonne rotative (4), et des moyens de raccordement (14) faisant partie intégrante de ladite colonne stationnaire (3), dans des positions de fonctionnement prédéterminées espacées de manière angulaire, et une position dans laquelle lesdits moyens de raccordement (15, 19) sont désengagés de manière axiale desdits moyens de raccordement (11, 14), **caractérisé en ce qu'**il comprend un élément de rattrapage de jeu (27) agissant sur ladite colonne stationnaire (4), avec l'interposition d'un palier de butée axial (29), dans la direction opposée à la direction de blocage desdits moyens de raccordement (15), ledit élément de rattrapage de jeu (27) ne fonctionnant que lorsque ladite colonne rotative (4) peut librement pivoter autour de la colonne stationnaire (3).

2. Mécanisme selon la revendication 1, **caractérisé en ce qu'**il comprend également un élément de blocage par frottement (20) agissant sur une pièce (7) faisant partie intégrante de ladite colonne rotative (4), ledit élément de blocage (20) bloquant ladite colonne stationnaire dans diverses positions de fonctionnement angulaires différentes de celles déterminées par lesdits moyens de raccordement (15, 19) et moyens de raccordement (11, 14).

3. Mécanisme selon la revendication 2, **caractérisé en ce que** ledit élément de blocage par frottement (20) est actionné par un vérin hydraulique annulaire (21) correspondant positionné de manière concentrique par rapport à ladite colonne rotative (4).

4. Mécanisme selon la revendication 1, **caractérisé en ce que** ledit élément de rattrapage de jeu (27) est composé d'une bague positionnée de manière concentrique par rapport à ladite colonne rotative (4) à l'intérieur d'une cavité annulaire (28) correspondante formée à l'intérieur de ladite base (1), ladite cavité (28) agissant comme un vérin hydraulique pour ladite bague (27).

5. Mécanisme selon la revendication 1, **caractérisé en ce que** lesdits moyens de raccordement (19), pour raccorder les moyens de raccordement (11) faisant partie intégrante de ladite colonne rotative (4) aux moyens de raccordement (14) faisant partie intégrante de ladite colonne stationnaire (3), sont actionnés par un vérin hydraulique annulaire (16a, 16b) positionné de manière concentrique par rapport à ladite colonne rotative (4).

6. Mécanisme selon l'une quelconque des revendications précédentes, **caractérisé en ce qu'**il comprend plusieurs vérins hydrauliques (32) et éléments de raccordement respectifs (33) agissant sur ledit élément annulaire (20) pour le pousser, lorsque cela est nécessaire pour le cycle de fonctionnement du mécanisme, dans une position relevée désengagée de ladite pièce (7) faisant partie intégrante de ladite colonne rotative (4) et pour le maintenir dans ladite position.
